**Europäisches Patentamt**

**European Patent Office**

**Office européen des brevets**

(19)

(11) Veröffentlichungsnummer : **0 494 195 B1**

(12) # EUROPÄISCHE PATENTSCHRIFT

(45) Veröffentlichungstag der Patentschrift :
**24.11.93 Patentblatt 93/47**

(51) Int. Cl.$^5$ : **B62D 5/097**

(21) Anmeldenummer : **90914149.1**

(22) Anmeldetag : **05.09.90**

(86) Internationale Anmeldenummer :
**PCT/EP90/01487**

(87) Internationale Veröffentlichungsnummer :
**WO 91/03396 21.03.91 Gazette 91/07**

(54) **HYDROSTATISCHE HILFSKRAFTLENKEINRICHTUNG, INSBESONDERE FÜR KRAFTFAHRZEUGE.**

(30) Priorität : **08.09.89 DE 3929977**

(43) Veröffentlichungstag der Anmeldung :
**15.07.92 Patentblatt 92/29**

(45) Bekanntmachung des Hinweises auf die
Patenterteilung :
**24.11.93 Patentblatt 93/47**

(84) Benannte Vertragsstaaten :
**DE DK**

(56) Entgegenhaltungen :
**WO-A-89/04788**
**DE-A- 3 839 784**
**GB-A- 2 083 421**
**GB-A- 2 113 631**

(73) Patentinhaber : **ZF FRIEDRICHSHAFEN**
**Aktiengesellschaft**
**D-88038 Friedrichshafen (DE)**

(72) Erfinder : **FASSBENDER, Rolf**
**Goethestrasse 39**
**D-7075 Mutlangen (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine hydrostatische Hilfskraftlenkeinrichtung, insbesondere für Kraftfahrzeuge, nach dem Oberbegriff des Anspruchs 1. Eine solche Hilfskraftlenkung enthält eine Handpumpe als Dosiereinrichtung und eine Steuerventileinrichtung, die das von einer Verstellpumpe geförderte Drucköl einem Lenkmotor zusteuert. In einer an die Verstellpumpe angeschlossenen Druckleitung bzw. hinter einem der Verstellpumpe nachgeordneten Stromteilventil sitzt eine verstellbare Blende zum Erzeugen einer Druckdifferenz. Diese Blende sieht man in der den Verbraucher steuernden Ventileinrichtung vor. In Abhängigkeit der Druckdifferenz läßt sich ein Verstellelement der Verstellpumpe oder des Stromteilventils betätigen und den Verbraucher ein der Belastung entsprechender Ölstrom zuführen. Die Stromversorgungseinrichtung (Verstellpumpe oder Stromteilventil) führt man so aus, daß die Druckdifferenz möglichst einen konstanten Wert beibehält.

Eine Hilfskraftlenkeinrichtung mit den beschriebenen Merkmalen ist aus der internationalen Veröffentlichung WO 89/04788 bekannt, an welche die Erfindung anknüpft. Will man in einer derartigen Anordnung große Ströme zum Verbraucher schicken, dann muß die die Blende enthaltende Ventileinrichtung sehr groß ausgeführt sein. Der Durchflußwiderstand der vollständig geöffneten Blende der Ventileinrichtung darf nämlich den Ölstrom nicht auf einen Wert begrenzen, der kleiner ist als der benötigte Verbraucherstrom. Dies gilt besonders dann, wenn der Hydraulikkreis bereits bei noch kaltem Öl ordnungsgemäß arbeiten soll. Häufig sind die den Verbraucher steuernden Ventileinrichtungen so ausgeführt, daß diese nur bei warmem Öl einen ausreichenden Höchststrom zum Verbraucher zulassen. Nach dem Start eines Fahrzeugs muß man sich daher kurzzeitig auf verringerte Lenkgeschwindigkeiten einstellen.

Um geringere Abmessungen der die Blende enthaltenden Ventileinrichtung zu erhalten, könnte man die zur Steuerung der Verstellpumpe nötige Druckdifferenz auch höher wählen. Als Folge davon müßte man jedoch höhere Verluste in Kauf nehmen, und zwar besonders dann, wenn mehrere Verbraucher über eine Konstantpumpe und ein dieser nachgeordnetes Stromteilventil zu versorgen sind.

Der Erfindung liegt die Aufgabe zugrunde, eine Hilfskraftlenkeinrichtung zu schaffen, in welcher die die Blende enthaltende Ventileinrichtung klein baut, wobei der größte benötigte Verbraucherstrom keiner Einschränkung unterliegt.

Diese Aufgabe läßt sich nach der Erfindung durch die im Anspruch 1 gekennzeichnete hydrostatische Hilfskraftlenkung lösen.

Dadurch, daß in dem hinter der Blende liegenden Abschnitt der Druckleitung eine Drosselstelle sitzt und die Druckleitung vor der Blende über einen einen Widerstand und eine weitere Drosselstelle enthaltenden Umgehungskanal direkt mit der Dosiereinrichtung in Verbindung steht, leitet man über die Blende nur noch einen Steuerstrom, während der Hauptölstrom bis zur Höchstmenge auf kurzem Wege unmittelbar über die Dosiereinrichtung zum Verbraucher fließt. Die Strömungswiderstände lassen sich daher in der Ventileinrichtung beträchtlich verringern. In weiterer Ausgestaltung der Erfindung ist es zweckmäßig, den Umgehungskanal in einen stirnseitig an den Ventilkolben angrenzenden, zur Dosiereinrichtung führenden Druckraum einmünden zu lassen und als Widerstand ein in Richtung zur Dosiereinrichtung öffnendes Druckventil zu verwenden. Dieses Druckventil öffnet, wenn der Regeldruck (Stand-By-Druck) überschritten wird.

Die Erfindung ist nachfolgend anhand eines in der Zeichnung dargestellten Ausführungsbeispiels näher erläutert. Es zeigen:

Fig. 1    einen Querschnitt durch die Hilfskraftlenkeinrichtung in vereinfachter Darstellung und

Fig. 2    einen Querschnitt durch die Ventileinrichtung gleichfalls in vereinfachter Darstellung.

In der hydrostatischen Hilfskraftlenkung nach der Erfindung ist ein innenverzahnter Zahnring 1 zwischen einem Deckel 2 und einem Umlenkzwischenring 3 eines Gehäuses 4 angeordnet und mit diesem und einem weiteren Abschlußdeckel 5 durch nicht dargestellte Schrauben verbunden. Ein außenverzahntes Zahnrad 6 weist einen Zahn weniger als der Zahnring 1 auf und bildet zusammen mit diesem eine Dosiereinrichtung 7 in der Form einer Handzahnradpumpe. Zwischen den Zähnen von Zahnring 1 und Zahnrad 6 und den an den beiden Teilen angrenzenden Stirnflächen des Deckels 2 und des Umlenkzwischenrings 3 befinden sich Verdrängerkammern 8. Das Zahnrad ist über eine Gelenkwelle 10 und einen Mitnehmerstift 11 mit Verdrehspiel mit einer Antriebswelle 12 verbunden. Die Antriebswelle 12 trägt eine hohle Betätigungshülse 13.

In einer in dem Gehäuse 4 angeordneten Ventilbohrung ist ein Ventilkolben 15 koaxial zu der Betätigungshülse 13 gelagert. Der Ventilkolben 15 ist über zwischen der Betätigungshülse 13 und dem Ventilkolben 15 angeordnete Steilgewindeprofile 16 bei einer Drehbewegung der Antriebswelle 12 in beiden Richtungen axial verschiebbar. Zwischen der Gelenkwelle 10 und der Antriebswelle 12 ist zur Mitteneinstellung ein Federelement 17 angeordnet.

Der Ventilkolben 15 bildet in der Ventilbohrung 14 zusammen mit den umgebenden Teilen eine Steuerventileinrichtung 18. An dem Ventilkolben 15 und in der Ventilbohrung 14 sind in bekannter Weise Nuten für die Steuerung des Drucköls zu und von den Verdrängerkammern 8 der Dosiereinrichtung 7 und zu und von den Druckräumen eines Lenkmotors 20 angeordnet. Der Ventilkolben 15 weist einen zentralen Kolbenbund 21 und benachbart dazu je eine Kolbenringnut 22 bzw. 23 auf, die durch je einen weiteren Kolbenbund 24 bzw. 25 begrenzt sind. Im Bereich der axialen Erstreckung des zentralen Kolbenbundes 21 ist eine zu der Ventilbohrung 14 führende Einmündung 26 einer Druckleitung 27 angeordnet, durch die von einer Hochdruckpumpe 28 mit veränderbarem Fördervolumen (im folgenden kurz Verstellpumpe genannt) Drucköl aus einem Behälter 30 zu der Steuerventileinrichtung 18 geleitet wird. Die Einmündung 26 befindet sich in einem zylindrischen Gehäusesteg 31, an den sich beiderseits je eine Rücklaufnut 32 bzw. 33 anschließt. Die Rücklaufnuten 32 und 33 stehen über eine Rücklaufleitung 34 mit dem Behälter 30 in Verbindung.

Zwischen dem Querschnitt der Einmündung 26 der Druckleitung 27 in die Ventilbohrung 14 und dem Kolbenbund 21 ist eine Blende 35 in der Form von zwei veränderbaren Steueröffnungen 35A und 35B gebildet. Die Steueröffnungen 35A und 35B und damit die Blende 35 sind in der neutralen Mittenstellung des Ventilkolbens 15 verschlossen.

Die Blende 35 erzeugt für die Verstellung der Verstellpumpe 28 eine Druckdifferenz. Im Bereich der axialen Erstreckung des zentralen Kolbenbundes 21 mündet in die Ventilbohrung 14 ein gemeinsamer Anschluß 36 für einen hinter der Blende 35 liegenden Abschnitt 37 der Druckleitung 27 und für eine Steuerleitung 38. Über die Steuerleitung 38 wird der hinter der Blende 35 herrschende Druck auf eine Verstelleinrichtung 40 der Verstellpumpe 28 übertragen. Anstelle der Verstellpumpe 28 kann man eine Konstantpumpe mit einem lastabhängig verstellbaren Stromteilventil vorsehen.

Die Breite des zentralen Kolbenbundes 21 ist kleiner als die kleinste axiale Erstreckung des Querschnittes des gemeinsamen Anschlusses 36. Die Breite des zylindrischen Gehäusesteges 31 ist kleiner als der Abstand der beiden Kolbenbunde 24 und 25. Dadurch hält man in der neutralen Mittenstellung des Ventilkolbens 15 eine Verbindung der Steuerleitung 38 über die Kolbennuten 22 und 23, die Rücklaufnuten 32 und 33 und über die Rücklaufleitung 34 mit dem Behälter 30 aufrecht.

An den beiden Enden des Ventilkolbens 15 ist je eine Umfangsreihe von Verteilerlängsnuten 41 bzw. 42 angeordnet, die bei einer Axialverschiebung des Ventilkolbens 15 mit einem von zwei stirnseitig an den Ventilkolben 15 angrenzenden Druckräumen 43 bzw. 44 verbunden werden. Die Verteilerlängsnuten 41 und 42 dienen außerdem als Kommutierungsnuten und sind über zwei Leitungen 45 und 46 in bekannter Weise an die Druckkammern 8 der Dosiereinrichtung 7 angeschlossen.

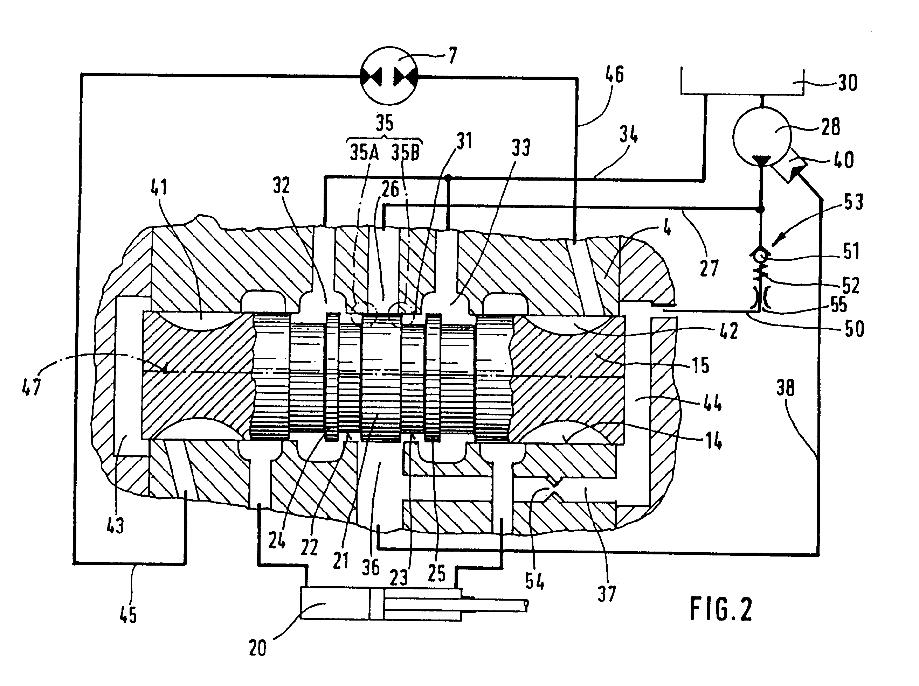

Um einen vollständigen radialen Druckausgleich in der Steuerventileinrichtung 18 zu erreichen, ist es zweckmäßig, in einer Ebene die Einmündung 26 und in einer anderen Ebene den gemeinsamen Anschluß 36 jeweils zweimal gegenüberliegend auszuführen. In Fig. 2 deutet eine strichpunktierte Linie 47 an, daß eine Verbindung durch den Ventilkolben 15 vom rechten stirnseitigen Druckraum 44 zum linken stirnseitigen Druckraum 43 vorhanden ist.

Bis hierher ist die beschriebene Lenkeinrichtung aus der eingangs erwähnten internationalen Veröffentlichung bekannt. Die Erfindung besteht darin, daß von der Druckleitung 27 ein Umgehungskanal 50 abzweigt, welcher zu den an die Dosiereinrichtung 7 anschließbaren Druckräumen 43 und 44 führt. In diesen Umgehungskanal 50 setzt man einen mit dem Durchflußstrom ansteigenden Widerstand, z. B. ein aus einer Kugel 51 und einer Feder 52 bestehendes Druckventil 53 zusammen mit einer verhältnismäßig großen Drosselstelle 55 ein. Den Widerstand wählt man mindestens so groß, daß sich zum Öffnen der Kugel 51 gegen die Kraft der Feder 52 ein Druck aufbaut, der gleich oder höher als der Regeldruck der Verstellpumpe ist. Unter dem Regeldruck (Stand-By-Druck) versteht man in diesem Zusammenhang einen niedrigen Konstantdruck, mit dem die Verstelleinrichtung 40 der Pumpe 28 zu arbeiten beginnt. Weiter enthält der zu den Druckräumen 43 und 44 führende Abschnitt 37 der Druckleitung 27 eine Drosselstelle 54.

Die Arbeitsweise der Lenkeinrichtung ist nachfolgend anhand der Fig. 2 näher beschrieben: In der gezeichneten Neutralstellung des Ventilkolbens 15 überdeckt der zentrale Kolbenbund 21 die Einmündung 26. Der gemeinsame Anschluß 36 steht über die beiden Kolbennuten 22 und 23 sowie die Rücklaufnuten 32 bzw. 33 mit dem Behälter 30 in Verbindung. Die Steuerleitung 38 ist daher gleichfalls entlastet. Da der Öffnungsdruck des Druckventils 53 gleich oder größer dem Regeldruck der Verstellpumpe ist, kann sich in der Druckleitung 27 bei einem gegen 0 l/min absinkenden Ölstrom der Regeldruck aufbauen. Die Verstellpumpe 28 hält dabei eine konstante Druckdifferenz zwischen der Druckleitung 27 und der Steuerleitung 38 aufrecht. Sollte das Druckventil 53 nicht vollständig abdichten, so fließt ein Leckstrom zum Druckraum 44 und von diesem über den Leitungsabschnitt 37, die Drosselstelle 54 und über den gemeinsamen Anschluß 36 zum Behälter 30.

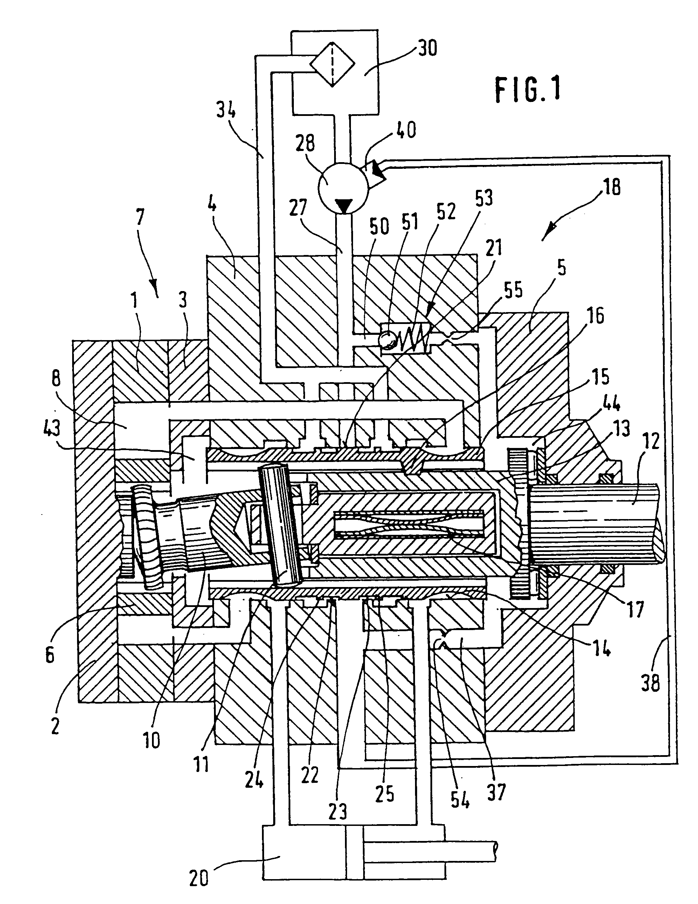

Verstellt man den Ventilkolben 15 aus der gezeichneten Stellung z. B. nach links, so wird die Verbindung von der Kolbennut 22 zu dem Anschluß 36 und zwischen der Kolbennut 23 und der Rücklaufnut 33 unterbrochen. Die vorherige Verbindung von der Steuerleitung 38 zum Behälter 30 ist getrennt. Etwa gleichzeitig gibt der Kolbenbund 21 mit der Steueröffnung 35B die Einmündung 26 mit einem sich mit dem Verstellweg des Ventilkolbens 15 allmählich vergrößernden Querschnitt frei. Die Einmündung 26 hat über den Anschluß 36 Verbindung mit dem Leitungsabschnitt 37, der über den Druckraum 44, die behelfsweise gezeichnete Linie 47, den Druckraum 43, die Verteilerlängsnut 41 und über die Leitung 45 an die Dosiereinrichtung 7 anschließt. Da ohne einen Durchfluß von der Einmündung 26 über die Steueröffnung 35B ein Druckausgleich zwischen der Druckleitung 27 und der Druckleitung 38 entstünde, erhöht die Verstellpumpe 28 sofort den Ölstrom und wirkt diesem Druckausgleich entgegen. Dieser Ölstrom fließt über die Drosselstelle 54 und den Druckraum 44 auf dem oben beschriebenen Weg zur Dosiereinrichtung 7. Der Ölstrom über die Drosselstelle 54 verursacht dort ein Druckgefälle. Um dieses Druckgefälle ist der Druck im Raum 44 niedriger als in der Leitung 38. Da die Druckdifferenz zwischen den Leitungen 27 und 38 in etwa konstant bleibt (Stand-By-Druck), erhöht sich bei einem Strom über die Drosselstelle 54 die Druckdifferenz über dem Druckventil 53 auf einen Wert, der größer als der Stand-By-Druck ist. Dies hat zur Folge, daß das Druckventil 53 öffnet und der Ölstrom über letzteres Ventil und die in Reihe liegende Drosselstelle 55 so weit ansteigt, bis die Druckdifferenz gleich dem Stand-By-Druck plus der Druckdifferenz an der Drosselstelle 54 ist. Die Größe der Drosselstelle 55 bestimmt dabei die Größe des Ölstromes über den Umgehungskanal 50. Das Öl fließt vom Druckventil 53 über den Kanal 50 unter Umgehung des Ventilkolbens 15 in den Druckraum 44. Die Größe der Drosselstelle 54 bestimmt die Größe des Ölstromes, welcher über die Blende 35 fließt. Der Hauptölstrom fließt jedoch über den Umgehungskanal 50. Das Drucksignal für die Verstellpumpe 28 bildet sich zwischen der Einmündung 26 und der Drosselstelle 54 aus. Der Durchflußwiderstand des Strömungsweges über den Umgehungskanal 50 beeinflußt daher den größtmöglichen Ölstrom zum Lenkmotor 20 nicht. Da sich außerdem über die Größe der Drosselstelle 54 der Ölstrom über die aufsteuerbare Blende 35 beliebig klein halten läßt, können die Querschnitte im Bereich dieser Blende 35 klein sein, ohne daß der größte Ölstrom zum Verbraucher dadurch eingeschränkt ist. Zweigt man den Umgehungskanal 50 im Gehäuse 4 (Fig. 1) unmittelbar am Eingang der Druckleitung 27 ab, dann beeinflussen ausschließlich die Leitungswiderstände zwischen der Verstellpumpe 28 und dem Gehäuse den größten Ölstrom zum Lenkmotor 20.

Es liegt im Rahmen der Erfindung, daß sich die beschriebene, einen Differenzdruck erzeugende Steuerventileinrichtung, die den Gesamtstrom in einen Steuerstrom und einen Hauptstrom aufteilt, nicht nur in Verbindung mit Lenkeinrichtungen verwenden läßt. Verwendungsmöglichkeiten finden sich allgemein in der Arbeitshydraulik überall dort, wo man größere Ölströme zur Betätigung eines Verbrauchers benötigt.

Bezugszeichen

| | | | |
|---|---|---|---|
| 1 | Zahnring | 30 | Behälter |
| 2 | Deckel | 31 | zylindrischer Gehäusesteg |
| 3 | Umlenkzwischenring | 32 | Rücklaufnut |
| 4 | Gehäuse | 33 | Rücklaufnut |
| 5 | Abschlußdeckel | 34 | Rücklaufleitung |
| 6 | Zahnrad | 35 | Blende |
| 7 | Dosiereinrichtung | 35A | Steueröffnung |
| 8 | Verdrängerkammer | 35B | Steueröffnung |
| 9 | - | 36 | gemeinsamer Anschluß |
| 10 | Gelenkwelle | 37 | Abschnitt der Druckleitung 27 |
| 11 | Mitnehmerstift | | |
| 12 | Antriebswelle | 38 | Steuerleitung |
| 13 | Betätigungshülse | 39 | - |
| 14 | Ventilbohrung | 40 | Verstelleinrichtung |
| 15 | Ventilkolben | 41 | Verteilerlängsnut |
| 16 | Steilgewindeprofil | 42 | Verteilerlängsnut |
| 17 | Federelement | 43 | Druckraum |
| 18 | Steuerventileinrichtung | 44 | Druckraum |
| 19 | - | 45 | Leitung |
| 20 | Lenkmotor | 46 | Leitung |
| 21 | zentraler Kolbenbund | 47 | strichpunktierte Linie |
| 22 | Kolbennut | 48 | - |
| 23 | Kolbennut | 49 | - |
| 24 | Kolbenbund | 50 | Umgehungskanal |
| 25 | Kolbenbund | 51 | Kugel |
| 26 | Einmündung | 52 | Feder |
| 27 | Druckleitung | 53 | Druckventil |
| 28 | Verstellpumpe | 54 | Drosselstelle |
| 29 | - | 55 | Drosselstelle |

**Patentansprüche**

1. Hydrostatische Hilfskraftlenkeinrichtung, insbesondere für Kraftfahrzeuge, mit folgenden Merkmalen:
   - Es ist eine von einem Lenkhandrad antreibbare und Verdrängungskammern (8) aufweisende Dosiereinrichtung (7) vorgesehen;
   - in Abhängigkeit von der Drehung des Lenkhandrades läßt sich eine Steuerventileinrichtung (18) aus einer neutralen Mittenstellung gegen die Kraft von Federelementen (17) in zwei Lenkrichtungen verstellen;
   - an die Steuerventileinrichtung (18) sind eine Druckleitung (27) einer Verstellpumpe (28) und eine zu

5

einem Behälter (30) führende Rücklaufleitung (34) angeschlossen;
- in der Druckleitung (27) ist eine Blende (35) angeordnet, und in Strömungsrichtung hinter der Blende zweigt eine zu einer Verstelleinrichtung (40) der Pumpe (28) führende Steuerleitung (38) ab;
- in der neutralen Mittenstellung der Steuerventileinrichtung (18) ist die Steuerleitung (38) mit der Rücklaufleitung (34) verbunden;
- die Steuerventileinrichtung (18) weist in einer Ventilbohrung (14) einen verschiebbaren Ventilkolben (15) auf, der ein im axialen Bereich der Einmündung (26) der Druckleitung (27) liegenden mittigen Kolbenbund (21) mit je einer benachbarten, durch je einen Kolbenbund (24, 25) begrenzten Kolbennut (22, 23) trägt;
- ein hinter der Blende (35) liegender Abschnitt (37) der Druckleitung (27) und die Steuerleitung (38) sind durch einen im Bereich des Kolbenbundes (21) liegenden gemeinsamen Anschluß (36) an die Ventilbohrung (14) angeschlossen;
- die Blende (35) liegt zwischen dem Querschnitt der Einmündung (26) der Druckleitung (27) in die Ventilbohrung (14) und dem gemeinsamen Anschluß (36) und hat einen in Abhängigkeit von der Stellung der Steuerventileinrichtung (18) veränderbaren Querschnitt,

**gekennzeichnet** durch folgende Merkmale:
- in dem hinter der Blende (35) liegenden Abschnitt (37) der Druckleitung (27) sitzt eine Drosselstelle (54) und
- die Druckleitung (27) vor der Blende (35) steht über einen einen Widerstand (51) und eine weitere Drosselstelle (55) enthaltenden Umgehungskanal (50) mit der Dosiereinrichtung (7) in Verbindung.

2. Hydrostatische Hilfskraftlenkung nach Anspruch 1, dadurch **gekennzeichnet**, daß der Umgehungskanal (50) in einen stirnseitig an den Ventilkolben (15) angrenzenden Druckraum (44) einmündet und der Widerstand ein in Richtung zur Dosiereinrichtung öffnendes Druckventil (51) ist.

## Claims

1. Hydrostatic auxiliary power steering device, particularly for use in automotive applications, with the following features:
   - A dosing device (7) is provided which can be driven by a steering wheel and which is provided with displacement chambers (8);
   - Depending on the rotation of the steering wheel, a control valve unit (18) can be moved in two steering directions from its neutral centre position against the bias of spring elements (17);
   - A pressure line (27) of a variable displacement pump (28) and a return circuit line (34) leading to tank (30) are connected to the control valve unit (18);
   - An orifice (35) is arranged within the pressure line (27), an a control line (38) leading to an actuating device (40) of the pump (28) branches off downstream from the orifice;
   - The control line (38) is connected to the return circuit line (34) in the neutral centre position of the control valve unit (18);
   - In a valve bore (14), the control valve unit (18) demonstrates a moveable valve piston (15) which carries a central piston collar (21) in the axial area of the entrance (26) to the pressure line (27) and the piston collar (21) demonstrates a piston groove (22, 23) on either side, which are in turn each delimited by a further piston collar (24, 25);
   - A section (37) of the pressure line (27) located behind the orifice (35), and the control line (38) are connected to the valve bore (14) by a common connection (36) located in the area of the piston collar (21);
   - The orifice (35) is arranged between the cross-section of the opening (26), the pressure line (27) in the valve bore (14), and the common connection (36), and its cross-section varies depending on the position of the control valve unit (18);

   **characterized** by the following features:
   - A throttle point (54) is arranged behind the orifice (35) in section (37) of the pressure line (27), and
   - the pressure line (27) arranged before the orifice (37) is connected to the dosing device (7) via a bypass duct (50) which contains a resistance and a further throttle point (55).

2. Hydrostatic auxiliary power steering device according to claim 1, **characterized** in that the bypass duct (50) leads into a pressure chamber (44) adjacent to the face end of the valve piston (15), and in that the resistance is a pressure valve (51) which opens in the direction of the dosing device.

**Revendications**

1. Mécanisme de direction à assistance hydrostatic, en particulier pour véhicules, présentant les caractéristiques suivantes:
   - Un dispositif de dosage (7) entraîné par un volant de direction et présentant des chambres de refoulement (8) est prévu;
   - En fonction de la rotation du volant, il est possible de régler un dispositif à soupape de commande (18) à partir d'une position centrale neutre, l'opposant à la force d'éléments élastiques (17) dans deux directions de braquage;
   - Une conduite de pression (27) d'une pompe à cylindrée variable (28) et une conduite de retour (34) menant à un réservoir (30) sont raccordées au dispositif à soupape de commande (18);
   - Un ajutage (35) est disposé dans la conduite de pression (27) et, dans le sens de l'écoulement, derrière l'ajutage, dérive une conduite de commande (38) menant à un dispositif de réglage (40) de la pompe (28);
   - En position centrale neutre du dispositif à soupape de commande (18), la conduite de commande (38) est reliée à la conduite de retour (34);
   - Le dispositif à soupape de commande (18) présente dans un perçage de soupape (14) un piston à soupape (15) amovible qui porte un épaulement de piston (21) central situé dans la zone axiale de l'entrée (26) de la conduite de pression (27) avec, respectivement, une rainure de piston (22, 23) voisine respectivement limitée par un épaulement de piston (24, 25);
   - Une section (37) de la conduite de pression (27) située derrière l'ajutage (35) et la conduite de commande (38) sont raccordées au perçage de soupape (14) par un raccordement commun (36) situé dans la zone de l'épaulement de piston (21);
   - L'ajutage (35) est situé entre la section transversale de l'entrée (26) de la conduite de pression (27) dans le perçage de soupape (14) et le raccordement commun (36) et a une section transversale variable en fonction de la position du dispositif à soupape de commande (18),

   **caractérisé** comme suit:
   - un point d'étranglement (54) est placé dans la section (37) de la conduite de pression (27) située derrière l'ajutage (35) et
   - La conduite de pression (27) avant l'ajutage (35) est en liaison avec le dispositif de dosage (7) par un canal de dérivation (50) contenant une résistance ainsi qu'un autre point d'étranglement (55).

2. Direction à assistance hydrostatique selon la revendication 1, **caractérisée** en ce que le canal de dérivation (50) débouche dans une chambre de pression (44) voisine au piston de soupape (15) du côté frontal et en ce que la résistance est une soupape de pression (51) s'ouvrant en direction du dispositif de dosage.

FIG.1

FIG.2

EP 0 494 195 B1